# EUROPÄISCHE PATENTSCHRIFT

(11) **EP 3 863 879 B1**
(45) Veröffentlichungstag und Bekanntmachung des Hinweises auf die Patenterteilung: **23.02.2022**
(21) Anmeldenummer: 20751504.0
(22) Anmeldetag: 31.07.2020
(51) Int. Cl.: B60K 37/06

(54) **VERFAHREN ZUM BETREIBEN EINES KRAFTFAHRZEUGSYSTEMS, STEUEREINRICHTUNG, UND KRAFTFAHRZEUG**
METHOD FOR OPERATING A MOTOR VEHICLE SYSTEM, CONTROL DEVICE, AND MOTOR VEHICLE
PROCÉDÉ DE FONCTIONNEMENT D'UN SYSTÈME DE VÉHICULE AUTOMOBILE, DISPOSITIF DE COMMANDE ET VÉHICULE AUTOMOBILE

(30) Priorität: 04.09.2019 DE 102019123615
(43) Veröffentlichungstag der Anmeldung: 18.08.2021
(73) Patentinhaber: Audi AG, 85045 Ingolstadt (DE)
(72) Erfinder: RUF, Markus, 73550 Waldstetten (DE); BRECHTER, Michael, 74219 Möckmühl (DE)
(86) Internationale Anmeldenummer: PCT/EP2020/071656
(87) Internationale Veröffentlichungsnummer: WO 2021/043513

(56) Entgegenhaltungen:
- EP-A1- 3 113 983
- EP-A1- 3 411 259
- DE-A1-102008 052 442
- DE-T5-112012 003 112

## Beschreibung

Die Erfindung betrifft ein Verfahren zum Betreiben eines Kraftfahrzeugsystems, zum Beispiel eines Navigationssystems, eines Anzeigegeräts oder eines Beleuchtungssystems, zum Beispiel eines Scheinwerfers.

In Kraftfahrzeugen kommt es immer mehr dazu, dass eine Vollausstattung verfügbar ist, auch wenn eine Person eigentlich ein geringer ausgestattetes Fahrzeug gekauft hat. Das Kraftfahrzeug kann dann zwar dazu ausgelegt sein, eine Funktion der Vollausstattung durchzuführen, diese ist dann jedoch gesperrt. Eine sogenannte "Function on Demand" ist verfügbar, sobald dafür bezahlt wird. Mit anderen Worten wird eine Bedienfunktion erst freigeschaltet, sobald der Benutzer des Kraftfahrzeugs dafür bezahlt.

Die US 2008/0154737 A1 beschreibt Techniken zum Identifizieren und zum Vermarkten eines Sets von Sekundärmarkt-Produkten für ein Kraftfahrzeug für einen Kunden während eines Verkaufsprozesses, wobei ein oder mehrere Computer verwendet werden.

Die CN 106504055 A beschreibt eine Methode und ein Gerät für ein virtuelles Upgrade von Automobil-Accessoires.

Aus der US 6,339,763 B1 ist ein Visualisierungssystem bekannt, um einem Benutzer zu ermöglichen, ein Kraftfahrzeug auszuwählen und um Bilder verschiedener Benutzer-ausgewählten Accessoires auf ein Bild des Kraftfahrzeugs zu überlagern, um einen Computer zu veranlassen, ein Bild der gewünschten Kombination anzuzeigen.

Das Dokument EP 3 411 259 A1 zeigt ein Verfahren zum Betreiben eines Kraftfahrzeugsystems, wobei eine Steuereinrichtung für das Kraftfahrzeugsystem einen Grundmodus bereitstellt, und für das Kraftfahrzeugsystem einen weiteren Bedienmodus feststellt, der sich von dem Grundmodus dahingehend unterscheidet, dass der weitere Bedienmodus gegenüber dem Grundmodus eine vorbestimmte, zusätzliche Bedienfunktion bereitstellt, und der aktuell gesperrt ist.

Die im Stand der Technik beschriebenen Verfahren sind dazu geeignet, Hardware, also zum Beispiel besondere Felgen oder andere Farben, dem Benutzer darzustellen, so dass er sich überlegen kann, ob er diese Accessoires haben möchte. Ein Anreiz, zusätzliche Funktionalitäten, also zusätzliche Bedienfunktionen auszuprobieren, ist weiterhin nicht groß, da diese nur gegen Bezahlung ausprobiert werden können und folglich sofort gekauft werden müssen.

Eine der Erfindung zugrunde liegende Aufgabe ist das Erhöhen einer Funktionalität eines Kraftfahrzeugs.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, einem Benutzer eines Kraftfahrzeugs eine zusätzliche Bedienfunktion zur Verfügung zu stellen, sobald dieser Fragen zu einem Quiz beantwortet hat und/oder aktuelle, Kraftfahrzeug-relevante Daten zur Verfügung stellt. Mit anderen Worten können durch verschiedene Aktivitäten, zum Beispiel Preisgabe von Daten oder einer Teilnahme an einem Quiz, vorzugsweise kurze Zeiträume zur Nutzung "erspielt" werden. Neben Vorteilen für den Benutzer, zum Beispiel einen Fahrer des Kraftfahrzeugs, ergeben sich dadurch auch Vorteile für den Kraftfahrzeughersteller.

Der Benutzer wird angeregt, neue Bedienfunktionen, also neue "Features", auszuprobieren. Es ergibt sich eine deutlich höhere Quote der Benutzung solcher Bedienfunktionen. Ist die Bedienfunktion zum Beispiel eine Verknüpfung mit einer Drohne, insbesondere einer Flugdrohne, die als "Belohnung" freigeschaltet werden kann, um Transportlieferungen zu übernehmen, können wichtige Aufgaben durchgeführt werden. Zu solchen Bedienfunktionen gehört zum Beispiel auch ein Betanken von dem Kraftfahrzeug mit einer Brennstoffzelle zum Vermeiden von einem "Liegenbleiben" des Kraftfahrzeugs.

Das erfindungsgemäße Verfahren zum Betreiben des Kraftfahrzeugsystems wird durch eine Steuereinrichtung durchgeführt. Unter einer Steuereinrichtung wird ein Gerät oder eine Gerätekomponente verstanden, das/die dazu eingerichtet ist, Signale zu empfangen, auszuwerten und Steuersignale zu erzeugen. Die Steuereinrichtung kann zum Beispiel als Steuergerät oder Steuerchip ausgestaltet sein.

Die Steuereinrichtung stellt für das Kraftfahrzeugsystem, das zum Beispiel ein Beleuchtungssystem sein kann, also zum Beispiel ein Scheinwerfersystem, einen Grundmodus bereit, in dem zum Beispiel die gängigen Funktionen der Scheinwerfer einstellbar sind, zum Beispiel Aufblenden und Abblenden.

Die Steuereinrichtung stellt für das Kraftfahrzeugsystem einen weiteren Bedienmodus fest, der sich von dem Grundmodus dahingehend unterscheidet, dass der weitere Bedienmodus gegenüber dem Grundmodus eine vorbestimmte, zusätzliche Bedienfunktion bereitstellt, wobei der weitere Bedienmodus aktuell gesperrt ist. Mit anderen Worten stellt der weitere Bedienmodus eine zusätzliche Bedienfunktion bereit, die aktuell noch nicht benutzt werden kann, das heißt, die Benutzung des weiteren Bedienmodus und damit der zusätzlichen Bedienfunktion sind nicht freigegeben.

Die Steuereinrichtung gibt einen Medieninhalt mit mindestens einer Frage zu einem thematischen Kontext aus, wobei der Medieninhalt ein Quiz ist und/oder Kraftfahrzeug-relevante Daten vom Benutzer erfragt.

Die Steuereinrichtung empfängt eine Eingabe von Informationen und überprüft diese Eingabe dahingehend, ob diese ein vorgegebenes Übereinstimmungskriterium erfüllt, welches ein Übereinstimmen mit einer Kategorie des thematischen Kontexts und/oder eine Soll-Antwort vorschreibt. Die Steuereinrichtung überprüft damit, ob die Eingabe von Informationen eine Antwort auf die mindestens eine Frage des ausgegebenen Medieninhalts ist. Beispielsweise können über ein Anzeigegerät aktuelle Antriebsdaten des Kraftfahrzeugs abgefragt werden und/oder persönliche Daten des Benutzers. Alternativ oder zusätzlich kann das Anzeigegerät zum Beispiel eine Quizfrage ausgeben, und zum Beispiel kann eine Spracheingabe mittels Spracherkennung dahingehend überprüft werden, ob der Benutzer diese Frage richtig beantwortet hat.

Nur falls das vorgegebene Übereinstimmungskriterium erfüllt ist, entsperrt die Steuereinrichtung den gesperrten Bedienmodus und gibt damit die zusätzliche Bedienfunktion frei. Idealerweise ist die Freischaltung der zusätzlichen Bedienfunktion kostenfrei, so dass der Benutzer des Kraftfahrzeugs die zusätzliche Bedienfunktion in Ruhe testen kann.

Es ergeben sich die oben genannten Vorteile.

Die zusätzliche Bedienfunktion kann vorzugsweise eine Navigationsfunktion sein; und/oder eine zusätzliche Scheinwerferfunktion zum Ansteuern von mindestens einem Leuchtmittel der Scheinwerfer, vorzugsweise eine Matrix-Beam-Funktion der Scheinwerferfunktion ermöglicht; und/oder eine Massagefunktion eines Kraftfahrzeugsitzes; und/oder eine größere Antriebsleistung des Motors; und/oder die Möglichkeit, Leuchtmittel eines Beleuchtungssystems und/oder eines Anzeigesystems in einer besonderen Art und Weise zu steuern; und/oder eine Sonnenschutzfunktion des Anzeigesystems oder einer Sonnenblende.

Vorzugsweise kann die Steuereinrichtung den weiteren Bedienmodus - und damit die zusätzliche Bedienfunktion - nur für einen vorbestimmten Zeitraum freischalten. Der Benutzer kann die zusätzliche Bedienfunktion so erst einmal testen, und sich dann entscheiden, ob er die zusätzliche Bedienfunktion behalten möchte.

Gemäß einem weiteren, bevorzugten Ausführungsbeispiel des erfindungsgemäßen Verfahrens kann der Medieninhalt Kraftfahrzeugdaten und/oder

Umgebungsdaten und/oder persönliche Daten erfragen. Vorzugsweise kann der Medieninhalt eine dreistufige Abfrage beschreiben und dabei Kraftfahrzeugdaten und Umgebungsdaten und mindestens eine persönliche Information des Benutzers erfragen. Insbesondere können dabei die abgefragten Kraftfahrzeugdaten Antriebsdaten betreffen. Der Benutzer kann so sehr transparent entscheiden, welche Daten er zur Verfügung stellen möchte. Idealerweise kann so auch die "Function on demand" auf seine Bedürfnisse abgestimmt werden.

Die Steuereinrichtung kann die zusätzliche Bedienfunktion vorzugsweise in Abhängigkeit von einer Eigenschaft und/oder einer Identität des Benutzers vorbestimmen, zum Beispiel in Abhängigkeit von einem Alter des Benutzers, oder zum Beispiel nach Identifizierung anhand eines Fingerabdrucks. So ist zum Beispiel für einen älteren Herrn eine Massagefunktion nützlicher als eine besondere Funktion der Scheinwerfer. Zusätzlich oder alternativ kann die Steuereinrichtung die zusätzliche Bedienfunktion in Abhängigkeit von einer Auswahl des Benutzers aus einer Mehrzahl an zusätzlichen Bedienfunktionen des gesperrten Bedienmodus vorbestimmen. Mit anderen Worten kann der Benutzer eine "Belohnung" auswählen. In allen Varianten erfolgt die Steuerung des Kraftfahrzeugs im Ergebnis besonders benutzerspezifisch.

Idealerweise kann die Steuereinrichtung den Medieninhalt mit der mindestens einen Frage nur dann ausgeben, falls eine Zustimmung des Benutzers hierzu vorliegt. Der Benutzer kann somit steuern, ob er an dem System zum Freischalten der zusätzlichen Bedienfunktion teilnehmen möchte.

Die oben gestellte Aufgabe wird gelöst durch eine Steuereinrichtung, die dazu eingerichtet ist, eine oder mehrere Ausführungsformen des erfindungsgemäßen Verfahrens durchzuführen. Die Steuereinrichtung kann vorzugsweise eine Prozessoreinrichtung aufweisen und/oder einen Datenspeicher. Unter einer Prozessoreinrichtung wird ein Gerät oder eine Gerätekomponente zur elektronischen Datenverarbeitung verstanden. Die Prozessoreinrichtung kann zum Beispiel mindestens einen Mikrocontroller und/oder mindestens einen Mikroprozessor aufweisen. Auf dem optionalen Datenspeicher kann vorzugsweise ein Programmcode zum Durchführen des erfindungsgemäßen Verfahrens abgelegt sein. Der Programmcode kann dann dazu ausgelegt sein, bei Ausführung durch die Prozessoreinrichtung die Steuereinrichtung dazu zu veranlassen, eine der oben beschriebenen Ausführungsformen des erfindungsgemäßen Verfahrens durchzuführen. Die Steuereinrichtung kann vorzugsweise als Steuerchip, Steuergerät oder Anwenderprogramm ("App") ausgestaltet sein.

Die oben gestellte Aufgabe wird gelöst durch ein Kraftfahrzeug, das eine Ausführungsform der erfindungsgemäßen Steuereinrichtung aufweist. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehören auch Weiterbildungen der erfindungsgemäßen Steuereinrichtung und des erfindungsgemäßen Verfahrens, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuereinrichtung und des erfindungsgemäßen Verfahrens hier nicht noch einmal beschrieben.

Die Erfindung umfasst auch die Kombinationen der Merkmale der beschriebenen Ausführungsformen.

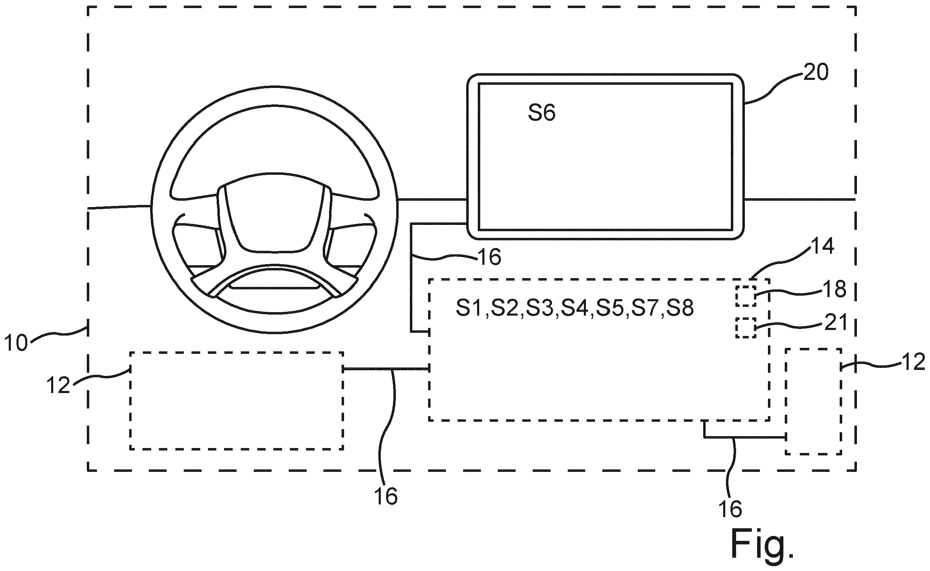

Im Folgenden sind Ausführungsbeispiele der Erfindung beschrieben. Hierzu zeigt die einzige Figur ("Fig.") eine schematische Darstellung zu einem Ausführungsbeispiel des erfindungsgemäßen Verfahrens und der erfindungsgemäßen Vorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Figur veranschaulicht das Prinzip des erfindungsgemäßen Verfahrens und der erfindungsgemäßen Vorrichtung anhand eines Ausführungsbeispiels. Hierzu zeigt die Figur ein Kraftfahrzeug 10, zum Beispiel einen Personenkraftwagen, mit beispielhaft zwei Kraftfahrzeugsystemen 12 und einer Steuereinrichtung 14.

Im Beispiel der Figur kann das eine der beiden Kraftfahrzeugsysteme 12 zum Beispiel ein Beleuchtungssystem, also eine Beleuchtungseinrichtung, sein, zum Beispiel eine Scheinwerferanlage; und das andere Kraftfahrzeugsystem 12 kann zum Beispiel ein Navigationsgerät sein. Die Kommunikation zwischen den einzelnen Komponenten erfolgt dabei durch Datenkommunikationsverbindungen 16, vorzugsweise drahtgebundene Datenkommunikationsverbindungen 16, wie zum Beispiel jeweils ein Datenbus des Kraftfahrzeugs 10. Geeignete drahtlose Datenkommunikationsverbindungen sind dem Fachmann ebenfalls aus dem Stand der Technik bekannt, zum Beispiel Bluetooth-Verbindungen oder WLAN-Verbindungen. Das Kraftfahrzeug 10 der Figur weist ebenfalls ein Anzeigegerät 20 auf, zum Beispiel ein Anzeigegerät mit einem Bildschirm.

Die Steuereinrichtung 14 des Beispiels der Figur weist eine optionale Prozessoreinrichtung 18 auf und/oder einen Datenspeicher 21. Die Steuereinrichtung kann jedes der Kraftfahrzeugsysteme 12 in einem jeweiligen Grundmodus bereitstellen (S1), das heißt, jedes der Kraftfahrzeugsysteme 12 kann vom Benutzer in dem Grundmodus betrieben werden. Im Grundmodus der beispielhaften Scheinwerferanlage kann der Benutzer alle nötigen Funktionen der Scheinwerfer einstellen, zum Beispiel Standlicht, Aufblenden und Abblenden. Im Grundmodus des beispielhaften Navigationsgeräts kann der Grundmodus zum Beispiel die üblichen Funktionen eines Navigationsgeräts bereitstellen, zum Beispiel das Suchen von geografischen Koordinaten, das Berechnen von Reiserouten und das Anzeigen des Reiseverlaufs mit Navigationshinweisen.

Beiden Kraftfahrzeugsysteme 12 können zum Beispiel ein Anwenderprogramm ("App") aufweisen oder Zugriff auf ein solches Anwenderprogramm haben, das in dem Datenspeicher 21 der Steuereinrichtung 14 abgelegt sein kann, oder eine solche "Function on Demand" kann zum Beispiel in einem Server bereit liegen. Für das beispielhafte Scheinwerfersystem kann zum Beispiel eine "Function on Demand" verfügbar sein, mit der zum Beispiel Leuchtdioden der Scheinwerfer derart gesteuert werden können, dass zum Beispiel bei einem erkannten Gegenverkehr ein entsprechendes Segment auf der Straße verdunkelt wird, so dass der Gegenverkehr nicht geblendet wird. Für das beispielhafte Navigationsgerät kann zum Beispiel eine "Function on Demand" verfügbar sein, mit der das Navigationsgerät zum Beispiel während des Ablaufs des Navigationsgeräts ein besonderes Design für die Darstellung der Karte verwendet und/oder zum Beispiel verschiedene Bilder für das Ego-Fahrzeug bereitstellen kann. Für beide der beispielhaften Kraftfahrzeugsysteme 12 können diese zusätzlichen "Functions on Demand" zunächst gesperrt sein, können jedoch käuflich erworben werden.

Zum Feststellen S2, dass solche weiteren Bedienmodi mit zusätzlichen Bedienfunktionen verfügbar sind, kann die Steuereinrichtung 14 zum Beispiel eine entsprechende Abfrage bei einem kraftfahrzeugexternen Datenserver (in der Figur nicht gezeigt) durchführen oder in dem eigenen Datenspeicher 21 oder in einem Datenspeicher des jeweiligen Kraftfahrzeugsystems 12 die Softwaremodule feststellen. Vorzugsweise kann vorgesehen sein, dass zum Beispiel eine Art "Probe-Abo" für zum Beispiel zwei Wochen kostenlos genutzt werden kann. Idealerweise kann vorgesehen sein, dass die Steuereinrichtung 14 zunächst überprüft, ob von einem Benutzer des Kraftfahrzeugs 10 eine Zustimmung vorliegt, dass ihm zum Beispiel ein Quiz oder gegen Freigabe von zum Beispiel Kraftfahrzeug-relevanten Daten ein solches Probe-Abo als "Belohnung" angeboten werden darf. Nach einer solchen Zustimmung kann zum Beispiel vor dem Start des Kraftfahrzeugs 10 gefragt werden, oder eine solche Zustimmung kann vom Benutzer in einem in der Steuereinrichtung 14 gespeicherten Benutzerprofil festgelegt werden. Dabei kann zum Beispiel vorgesehen sein, dass zum Beispiel beim Start des Kraftfahrzeugs 10 oder beim Einrichten des Benutzerprofils gefragt wird, ob der Benutzer an einer solchen Aktion teilnehmen möchte. Der Benutzer kann dann rückmelden, ob er dem zustimmt oder ob er es zum Beispiel dauerhaft ablehnt.

Vorzugsweise kann für das Verfahren eine spezielle Auswahl an Bedienfunktionen vorgesehen werden, also vorbestimmt werden (S3). Die Auswahl an Bedienfunktionen kann zum Beispiel von einer Eigenschaft oder einer Identität des Benutzers abhängen. Hat der Benutzer zum Beispiel sein Geburtsdatum in ein Profil eingegeben und stellt die Steuereinrichtung 14 anhand des Profils fest, dass es sich um einen älteren Herrn handelt, können zum Beispiel die Scheinwerferfunktion und/oder optional eine besondere Massagesitzfunktion des Kraftfahrzeugsitzes ausgewählt werden, eine Funktion zur erweiterten Auswahl an Ambientelicht und die erweiterte Navigationssystemfunktion jedoch nicht. Ist der Benutzer zum Beispiel eine junge Dame, so kann die zusätzliche Bedienfunktion des Navigationssystems und/oder die des besonderen Ambientelichts ausgewählt werden, jedoch zum Beispiel nicht die Massagefunktion und die Scheinwerferfunktion. Erfolgt eine solche Auswahl in Abhängigkeit von einer Identität des Benutzers, kann diese zum Beispiel festgestellt werden (S4), indem zum Beispiel ein Fingerabdrucksensor des Kraftfahrzeugs, der zum Beispiel in der Mittelkonsole angeordnet sein kann, einen Fingerabdruck erfasst und den digitalen Fingerabdruck an die Steuereinrichtung 14 weiterleitet, und die Steuereinrichtung 14 kann dann anhand des Fingerabdrucks die Identität erkennen.

Im Beispiel der Figur kann zum Beispiel die Bedienfunktion zusätzlicher Designs als zusätzliche Bedienfunktion des beispielhaften Navigationsgeräts zur Verfügung stehen und für das Scheinwerfersystem die sogenannte "Matrix-Beam-Funktion". In dem Datenspeicher 21 können zum Beispiel mehrere Mediendateien mit jeweils einem Medieninhalt abgelegt sein. Einige dieser Dateien können zum Beispiel einen Medieninhalt beschreiben, der als Frage eine Quizfrage zu einem thematischen Kontext ausgibt, zum Beispiel die Frage "Wie heißt die Hauptstadt von Peru?". Die Steuereinrichtung 14 kann die entsprechende Datei an das Anzeigegerät 20 übertragen (S5), und das Anzeigegerät 20 kann den Medieninhalt dann ausgeben (S6). Mit anderen Worten gibt die Steuereinrichtung 14 den Medieninhalt mittels des Anzeigegeräts 20 aus (S6). Das Ausgeben S6 kann zum Beispiel dahingehend erfolgen, dass auf dem Bildschirm des Anzeigegeräts 20 ein Pop-up-Fenster erscheint, das die Frage zeigt. Alternativ zur Ausgabe S6 durch ein Anzeigegerät 20 kann der Medieninhalt zum Beispiel durch ein Lautsprechersystem ausgegeben werden, wobei dann zum Beispiel eine elektronische Stimme die Frage aussprechen kann.

Der thematische Kontext der beispielhaften Frage in der Figur hat als Soll-Antwort das Wort "Lima". Die Soll-Antwort oder Lösung kann zum Beispiel ebenfalls im Datenspeicher 21 abgelegt sein. Eine Eingabe von Informationen kann empfangen werden (S7), indem zum Beispiel eine Texteingabe mittels einer Tastatur, einem berührungssensitiven Bildschirm oder einer Spracheingabe empfangen wird. Die Spracheingabe oder Texteingabe kann dann zum Beispiel mit der Soll-Antwort verglichen werden, und im Beispiel der Figur wird bei dieser Überprüfung S8 festgestellt, dass der Prüfer die richtige Antwort gesagt hat. Optional kann durch das beispielhafte Anzeigegerät 20 dann zum Beispiel ein weiteres Pop-up-Fenster angezeigt werden mit der Information "Sie haben gewonnen".

Als "Belohnung" kann dann die beispielhafte Scheinwerferfunktion für zum Beispiel 20 Stunden freigeschaltet werden und/oder die beispielhafte Navigationsfunktion (S9).

Gemäß einem weiteren Ausführungsbeispiel, das auch anhand der Figur beschrieben werden kann, können die grundsätzlichen Abläufe so ablaufen, wie bereits zum vorherigen Beispiel beschrieben, wobei im Folgenden nur auf die Unterschiede eingegangen wird.

Alternativ oder zusätzlich zu der Quizfrage kann der thematische Kontext auf bestimmte Kraftfahrzeugdaten gerichtet sein, wobei zum Beispiel in drei Stufen zunächst aktuelle Kraftfahrzeugdaten abgefragt werden, zum Beispiel Antriebsdaten, wie eine aktuelle Leistung, Masseströme, ein Kraftstoffdruck eines Verbrennungsmotors, ein Kraftstoffverbrauch und/oder ein Drehmoment. Beispielsweise kann das Anzeigegerät 20 die Frage "Möchten Sie Ihre Daten zum Zwecke einer internen, anonymisierten Statistik übermitteln?" anzeigen (S6), und nach einem Bestätigen, also nach einer Zustimmung zur Übermittlung der Daten, kann die Steuereinrichtung 14 auf die entsprechenden Daten zugreifen und diese zum Beispiel an einen Kraftfahrzeughersteller übermitteln, der die Daten für zum Beispiel eine anonymisierte, interne Statistik verwenden kann.

In diesem Fall kann der thematische Kontext "berechtigtes Verwenden von Antriebsdaten" und die Eingabe von Informationen S7 kann dann die Zustimmung des Benutzers sein, und bei der Überprüfung S8 kann die erfolgte Zustimmung überprüft werden.

In einer zweiten Stufe können auf diese Art und Weise zum Beispiel Umgebungsdaten abgefragt werden, zum Beispiel geografische Koordinaten, wo sich das Kraftfahrzeug gerade befindet, eine Geschwindigkeit des Kraftfahrzeugs 10 und/oder eine Außentemperatur.

In der dritten Stufe können dann analog persönliche Daten abgefragt werden, zum Beispiel eine Anzahl von Personen im Kraftfahrzeug 10 und/oder Koordinaten des Kraftfahrzeugs 10 und/oder Reise-/Fahrtzeiten.

In einem weiteren Ausführungsbeispiel, das ebenfalls anhand der Figur erläutert werden kann, kann zunächst ein Benutzer, zum Beispiel ein Fahrer, gefragt werden, ob er an "Zusatzaktivitäten" teilnehmen möchte. Dies kann zum Beispiel über ein Mensch-Maschine-Interface ("MMI"), zum Beispiel über eine Sprachanfrage, erfolgen. Erst bei einer positiven Rückmeldung kann das weitere Verfahren dann aktiviert werden.

Beispielhaft kann ein Quiz mit Fragen und Antworten angezeigt werden (S6). Bei mehreren Fragen können dazwischen zum Beispiel Werbeinhalte platziert werden. Ein Gewinn des beispielhaften Quiz kann zum Beispiel eine Nutzung von buchbaren Fahrzeugfunktionalitäten sein, zum Beispiel Navigation, Matrix-Beam, Massagefunktion des Sitzes oder eine etwas größere Antriebsleistung. Der Gewinn kann vorzugsweise für einen eingeschränkten Zeitraum zur Verfügung gestellt werden.

Vorzugsweise kann dabei nicht nur eine Gewinnoption vorhanden sein, sondern der beispielhafte Fahrer kann idealerweise aus mindestens zwei unterschiedlichen Gewinnen auswählen.

Alternativ oder zusätzlich kann eine Preisgabe von Daten abgefragt werden, vorzugsweise eine dreistufige Preisgabe von Daten. Dies können sein:
- Antriebsdaten (zum Beispiel Leistungen, Parameter der Batterie (zum Beispiel I, T), Daten einer Brennstoffzelle, zum Beispiel Masseströme, eine elektrische Spannung, ein Volumen oder Daten von einem Verbrennungsmotor, zum Beispiel ein Kraftstoffdruck; und/oder
- Umgebungsdaten, zum Beispiel eine Höhe, eine Temperatur, zum Beispiel eine Außentemperatur oder eine Ambientetemperatur, oder eine Kraftfahrzeuggeschwindigkeit; und/oder
- persönliche Daten, zum Beispiel eine Anzahl von Personen im Kraftfahrzeug 10, Koordinaten und/oder Reise- und/oder Fahrzeiten.

Nach der Preisgabe über zum Beispiel einen bestimmten Zeitraum, beispielsweise 20 Stunden, kann ebenfalls eine Fahrzeugfunktionalität zur Nutzung ausgewählt werden.

Die Figur zeigt also eine Anordnung und ein Verfahren zur Analyse und Rückmeldung von Daten in einem Kraftfahrzeug 10.

Insgesamt zeigen die Beispiele, wie durch die Erfindung eine Anordnung und ein Verfahren zur Analyse und Rückmeldung von Daten in einem Kraftfahrzeug 10 bereitgestellt werden kann.

Durch verschiedene Aktivitäten (Preisgabe von Daten, Teilnahme an Quiz oder ähnliches) können kurze Zeiträume zur Nutzung (function on demand) "erspielt" werden. Neben den Vorteilen für den Benutzer gibt es dabei auch Vorteile für den Kraftfahrzeug-Hersteller. Es ergeben sich die oben beschriebenen Vorteile.

Möglich ist zum Beispiel eine Verknüpfung mit einer Flugdrohne (Übernehmen von Transportlieferung => Freischaltung als "Belohnung"); ein Betanken von einem oder mehreren Kraftfahrzeugen mit Brennstoffzellen zur Vermeidung von Liegenbleibern => auch hier "Belohnung" für Übernahme von Tankfunktionalitäten; eventuell können auch weitere für den Kraftfahrzeug-Hersteller wichtige Aufgaben entsprechend durch Freigabe von Function on demand belohnt werden.

## Patentansprüche

1. Verfahren zum Betreiben eines Kraftfahrzeugsystems (12), wobei eine Steuereinrichtung (14):
- für das Kraftfahrzeugsystem (12) einen Grundmodus bereitstellt (S1),
- für das Kraftfahrzeugsystem (12) einen weiteren Bedienmodus feststellt, der sich von dem Grundmodus dahingehend unterscheidet, dass der weitere Bedienmodus gegenüber dem Grundmodus eine vorbestimmte, zusätzliche Bedienfunktion bereitstellt, und der aktuell gesperrt ist (S2),
- einen Medieninhalt mit mindestens einer Frage zu einem thematischen Kontext ausgibt (S6), wobei der Medieninhalt ein Quiz ist und/oder Kraftfahrzeug-relevante Daten vom Benutzer erfragt,
- eine Eingabe von Informationen empfängt (S7) und diese dahingehend überprüft (S8), ob diese ein vorgegebenes Übereinstimmungskriterium erfüllt, welches ein Übereinstimmen mit einer Kategorie des thematischen Kontexts und/oder eine Soll-Antwort vorschreibt und damit eine Antwort auf die mindestens eine Frage des ausgegebenen Medieninhalts ist,
- nur falls das vorgegebene Übereinstimmungskriterium erfüllt ist: den gesperrten Bedienmodus entsperrt und damit die zusätzliche Bedienfunktion freigibt (S9).

2. Verfahren nach Anspruch 1, wobei die zusätzliche Bedienfunktion ist:
eine Navigationsfunktion; und/oder eine zusätzliche Scheinwerferfunktion zum Ansteuern von mindestens einem Leuchtmittel der Scheinwerfer; und/oder eine Massagefunktion; und/oder eine größere Antriebsleistung; und/oder die Möglichkeit, Leuchtmittel eines Beleuchtungssystems und/oder eines Anzeigesystems in einer besonderen Art und Weise zu steuern; und/oder eine Sonnenschutzfunktion des Anzeigesystems oder einer Sonnenblende.

3. Verfahren nach einem der vorhergehenden Ansprüche, wobei die Steuereinrichtung (14) den weiteren Bedienmodus nur für einen vorbestimmten Zeitraum freischaltet (S9).

4. Verfahren nach einem der vorhergehenden Ansprüche, wobei der Medieninhalt Kraftfahrzeugdaten, und/oder Umgebungsdaten, und/oder persönliche Daten erfragt; vorzugsweise wobei der Medieninhalt eine dreistufige Abfrage beschreibt und dabei Kraftfahrzeugdaten und Umgebungsdaten und mindestens eine persönliche Information erfragt; insbesondere wobei Kraftfahrzeugdaten Antriebsdaten betreffen.

5. Verfahren nach einem der vorhergehenden Ansprüche, wobei die Steuereinrichtung (14) die zusätzliche Bedienfunktion in Abhängigkeit von einer Eigenschaft und/oder Identität des Benutzers vorbestimmt (S3); und/oder in Abhängigkeit von einer Auswahl des Benutzers aus einer Mehrzahl an zusätzlichen Bedienfunktionen des gesperrten Bedienmodus.

6. Verfahren nach einem der vorhergehenden Ansprüche, wobei die Steuereinrichtung (14) den Medieninhalt mit der mindestens einen Frage nur dann ausgibt (S6), falls eine Zustimmung des Benutzers hierzu vorliegt.

7. Steuereinrichtung (14), die dazu eingerichtet ist, ein Verfahren nach einem der vorhergehenden Ansprüche durchzuführen.

8. Kraftfahrzeug (10), aufweisend eine Steuereinrichtung (14) nach Anspruch 7.

## Claims

1. Method for operating a motor vehicle system (12), wherein a control apparatus (14):
- provides a basic mode (S1) for the motor vehicle system (12),
- establishes a further operating mode for the motor vehicle system (12), which differs from the basic mode in that the further operating mode, compared to the basic mode, provides a predetermined, additional operating function, and which is currently blocked (S2),
- outputs media content containing at least one question about a topical context (S6), wherein the media content is a quiz and/or asks the user for motor vehicle-related data,
- receives an input of information (S7) and checks this (S8) as to whether it meets a predefined match criterion that prescribes a match with a category of the topical context and/or an intended answer and is thus an answer to the at least one question from the output media content,
- unblocks the blocked operating mode and thereby enables the additional operating function (S9) only if the predefined match criterion is met.

2. Method according to claim 1, wherein the additional operating function is a navigation function and/or an additional headlight function for controlling at least one headlight light source and/or a massage function and/or greater drive power and/or the possibility of controlling the light source of a lighting system and/or a display system in a particular manner and/or a sun protection function of the display system or a sun blind.

3. Method according to any of the previous claims, wherein the control apparatus (14) only activates the further operating mode for a predetermined period (S9).

4. Method according to any of the previous claims, wherein the media content asks for motor vehicle data and/or environmental data and/or personal data, preferably wherein the media content describes a three-step query and thereby asks for motor vehicle data and environmental data and at least one piece of personal information, in particular wherein motor vehicle data relates to drive data.

5. Method according to any of the previous claims, wherein the control apparatus (14) predetermines the additional operating function as a function of a characteristic and/or identity of the user (S3) and/or as a function of a user selection from a plurality of additional operating functions of the blocked operating mode.

6. Method according to any of the previous claims, wherein the control apparatus (14) only outputs the media content with the at least one question (S6) if there is user consent for this.

7. Control apparatus (14), which is configured to implement a method according to any of the previous claims.

8. Motor vehicle (10) having a control apparatus (14) according to claim 7.

## Revendications

1. Procédé de fonctionnement d'un système de véhicule automobile (12), dans lequel un appareil de commande (14) :
- fournit (S1) un mode de base pour le système de véhicule automobile (12),
- détermine pour le système de véhicule automobile (12) un autre mode de commande qui se distingue du mode de base en ce que l'autre mode de commande met à disposition une fonction de commande supplémentaire prédéterminée par rapport au mode de base, et qui est actuellement verrouillé (S2),
- émet (S6) un contenu multimédia avec au moins une question relative à un contexte thématique, dans lequel le contenu multimédia est un quiz et/ou demande à l'utilisateur des données relatives au véhicule automobile,
- reçoit (S7) une entrée d'informations et la vérifie (S8) pour savoir si elle remplit un critère de concordance prédéfini, lequel prescrit une concordance avec une catégorie du contexte thématique et/ou une réponse de consigne et qui est donc une réponse à l'au moins une question du contenu multimédia émis,
- uniquement si le critère de concordance prédéfini est rempli : déverrouille le mode de commande verrouillé et active (S9) ainsi la fonction de commande supplémentaire.

2. Procédé selon la revendication 1, dans lequel la fonction de commande supplémentaire est : une fonction de navigation ; et/ou une fonction de phare supplémentaire pour commander au moins une source lumineuse des phares ; et/ou une fonction de massage ; et/ou une puissance d'entraînement plus grande ; et/ou la possibilité de commander les sources lumineuses d'un système d'éclairage et/ou d'un système d'affichage d'une manière particulière ; et/ou une fonction de protection solaire du système d'affichage ou d'un pare-soleil.

3. Procédé selon l'une quelconque des revendications précédentes, dans lequel l'appareil de commande (14) active (S9) l'autre mode de commande uniquement pendant une période prédéterminée.

4. Procédé selon l'une quelconque des revendications précédentes, dans lequel le contenu multimédia demande des données de véhicule automobile, et/ou des données d'environnement, et/ou des données personnelles ; de préférence dans lequel le contenu multimédia décrit une demande en trois étapes et demande alors des données de véhicule automobile et des données d'environnement et au moins une information personnelle ; en particulier dans lequel les données de véhicule automobile concernent des données d'entraînement.

5. Procédé selon l'une quelconque des revendications précédentes, dans lequel l'appareil de commande (14) prédétermine (S3) la fonction de commande supplémentaire en fonction d'une caractéristique et/ou d'une identité de l'utilisateur ; et/ou en fonction d'une sélection de l'utilisateur parmi une pluralité de fonctions de commande supplémentaires du mode de commande verrouillé.

6. Procédé selon l'une quelconque des revendications précédentes, dans lequel l'appareil de commande (14) émet (S6) le contenu multimédia avec l'au moins une question uniquement s'il y a un accord de l'utilisateur à cet effet.

7. Appareil de commande (14) qui est configuré pour mettre en oeuvre un procédé selon l'une quelconque des revendications précédentes.

8. Véhicule automobile (10) présentant un appareil de commande (14) selon la revendication 7.
